# EUROPEAN PATENT APPLICATION

(11) **EP 4 803 949 A1**
(43) Date of publication of application: **09.09.2026**
(21) Application number: 23957765.3
(22) Date of filing: 01.11.2023
(51) Int. Cl.: G02B 21/08, G02B 21/36

(54) **MICROSCOPE APPARATUS GENERATING STRUCTURED ILLUMINATION AND OPERATION METHOD THEREOF**

(71) Applicant: Korea Basic Science Institute, Daejeon 34133 (KR)
(72) Inventor: LEE, Kye Sung, Daejeon 34127 (KR)
(74) Representative: Biallo, Dario
(86) International application number: PCT/KR2023/017299
(87) International publication number: WO 2025/095169

(57) **Abstract**

A microscope apparatus generating structured illumination is disclosed. One embodiment may comprise: a light source unit for modulating an optical signal so as to generate a modulated optical signal, and outputting the generated modulated optical signal; an illumination unit for performing beam scanning on the basis of the outputted modulated optical signal so that a structured illumination pattern is generated on a sample; a detection unit for collecting an optical signal from the sample and acquiring a high-quality image of the sample on the basis of the collected optical signal; and a control unit for controlling the beam scanning so that the illumination unit generates the structured illumination pattern on the sample, and performing at least one among synchronization between the light source unit and the detection unit, and synchronization between the illumination unit and the detection unit.

## Description

### TECHNICAL FIELD

The following embodiments relate to a microscope apparatus for generating structured illumination and an operating method thereof.

### BACKGROUND ART

A structured illumination microscope may obtain a sample image with improved optical sectioning and spatial resolution based on images obtained by illuminating a sample with a predetermined pattern (e.g., an interference pattern). An existing structured illumination microscope may use a diffraction grating or a spatial light modulator (SLM) to generate structured illumination.

As a related art, there is Korean Patent Application Publication No. 10-2018-0033379 (Title of the invention: Device for Structured Illumination Microscopy, Applicant: Daegu Gyeongbuk Institute of Science and Technology (DGIST)).

The above description is information the inventor(s) acquired during the course of conceiving the present disclosure, or already possessed at the time, and was not necessarily publicly known before the present application is filed.

### DISCLOSURE OF THE INVENTION

### TECHNICAL SOLUTIONS

A microscope apparatus for generating structured illumination, according to an embodiment, includes a light source portion configured to modulate an optical signal to generate a modulated optical signal and configured to output the generated modulated optical signal, an illumination portion configured to generate a structured illumination pattern on a sample by performing beam scanning based on the output modulated optical signal, a detector configured to collect an optical signal from the sample and configured to obtain an image of the sample based on the collected optical signal, and a controller configured to control the beam scanning so that the illumination portion generates the structured illumination pattern on the sample and configured to perform at least one of synchronization between the light source portion and the detector and synchronization between the illumination portion and the detector.

The illumination portion may be configured to generate a line beam for the beam scanning using the output modulated optical signal and generate a line structured illumination pattern on a focal plane of the sample by illuminating the generated line beam on the sample through a plurality of lenses.

The illumination portion may include a first lens configured to focus the output modulated optical signal on a line beam, a scanner configured to adjust a position of an optical axis of the line beam to perform the beam scanning, a scan lens configured to focus the line beam, a tube lens on which the focused line beam is incident, and an objective lens configured to condense the line beam passing through the tube lens and configured to illuminate the line beam on the sample.

The controller may be configured to synchronize a scanner that performs the beam scanning with an image sensor so that a beginning and an end of a frame of the image sensor of the detector are aligned with a beginning and an end of the structured illumination pattern, respectively.

The detector may include an image sensor based on a rolling shutter. The controller may be configured to synchronize a scanner that performs the beam scanning with the image sensor so that a beginning and a velocity of a rolling line of the image sensor are aligned with a beginning and a velocity of the structured illumination pattern, respectively.

A width of the rolling line may correspond to a multiple of a value obtained by multiplying a spatial period of the structured illumination pattern by a first magnification. The first magnification may represent a magnification determined based on a magnification of each of an objective lens and a tube lens in the microscope apparatus.

A spatial period of the structured illumination pattern may be set to a value that is close to a size of a light spot that is consecutively repeated in the structured illumination pattern. A width of the rolling line may correspond to a value obtained by multiplying the set spatial period by a first magnification. A duty cycle of the modulated optical signal may be less than a time corresponding to a width of one pixel of the image sensor. The first magnification may represent a magnification determined based on a magnification of each of an objective lens and a tube lens in the microscope apparatus.

The detector may include a line sensor. The controller may be configured to synchronize the light source portion with the line sensor so that an image corresponding to one period of the structured illumination pattern is obtained within one frame of the line sensor. A sensor width of the line sensor may be greater than a width of one structured illumination in the structured illumination pattern.

The controller may be configured to control the light source portion so that a time delay occurs in the modulated optical signal, the illumination portion may be configured to generate a structured illumination pattern on a sample by performing the beam scanning based on the modulated optical signal in which the time delay occurs, and the detector may be configured to collect a first signal from the sample and obtain an image having a first phase of the sample based on the collected first signal.

The controller may be configured to control the light source portion so that a time delay occurs again in the modulated optical signal in which the time delay occurs, the illumination portion may be configured to generate a structured illumination pattern on a sample by performing the beam scanning based on the modulated optical signal in which the time delay occurs again, and the detector may be configured to collect a second signal from the sample and obtain an image having a second phase of the sample based on the collected second signal.

The controller may be configured to obtain a high-quality image of the sample using the obtained images.

The controller may be configured to control the illumination portion so that the illumination portion generates, on the sample, a structured illumination pattern that is different for each frame of the detector, receive an image for the each frame from the detector, and generate a high-quality image using the image for the each frame.

An operating method of a microscope apparatus that generates structured illumination, according to an embodiment, includes modulating an optical signal to generate a modulated optical signal and outputting the generated modulated optical signal, generating a structured illumination pattern on a sample by performing beam scanning based on the output modulated optical signal, collecting an optical signal from the sample, and obtaining an image of the sample based on the collected optical signal.

The generating may include generating a line beam for the beam scanning using the output modulated optical signal and generating a line structured illumination pattern on a focal plane of the sample by illuminating the generated line beam on the sample through a plurality of lenses.

The operating method may further include synchronizing a scanner that performs the beam scanning with an image sensor so that a beginning and an end of a frame of the image sensor that obtains the image are aligned with a beginning and an end of the structured illumination pattern, respectively.

The microscope apparatus may include an image sensor based on a rolling shutter. The operating method may further include synchronizing a scanner that performs the beam scanning with the image sensor so that a beginning and a velocity of a rolling line of the image sensor are aligned with a beginning and a velocity of the structured illumination pattern, respectively.

A width of the rolling line may correspond to a multiple of a value obtained by multiplying a spatial period of the structured illumination pattern by a first magnification. The first magnification may represent a magnification determined based on a magnification of each of an objective lens and a tube lens in the microscope apparatus.

A spatial period of the structured illumination pattern may be set to a value that is close to a size of a light spot that is consecutively repeated in the structured illumination pattern. A width of the rolling line may correspond to a value obtained by multiplying the set spatial period by a first magnification. A duty cycle of the modulated optical signal may be less than a time corresponding to a width of one pixel of the image sensor. The first magnification may represent a magnification determined based on a magnification of each of an objective lens and a tube lens in the microscope apparatus.

The microscope apparatus may include a line sensor. The operating method may further include synchronizing a light source portion that outputs the modulated optical signal with the line sensor so that an image corresponding to one period of the structured illumination pattern is obtained within one frame of the line sensor.

A sensor width of the line sensor may be greater than a width of one structured illumination in the structured illumination pattern.

The operating method may further include causing a time delay to occur in the modulated optical signal, generating a structured illumination pattern on a sample by performing the beam scanning based on the modulated optical signal in which the time delay occurs, collecting a first signal from the sample, and obtaining an image having a first phase of the sample based on the collected first signal, include causing a time delay to occur again in the modulated optical signal in which the time delay occurs, generating a structured illumination pattern on a sample by performing the beam scanning based on the modulated optical signal in which the time delay occurs again, collecting a second signal from the sample, and obtaining an image having a second phase of the sample based on the collected second signal, and include obtaining a high-quality image of the sample using the obtained images.

The operating method may further include, by generating, on the sample, a structured illumination pattern that is different for each frame of an image sensor, obtaining an image for the each frame and generating a high-quality image using the image for the each frame.

### EFFECTS OF THE INVENTION

The embodiment may generate periodic structured illumination on a sample using temporal amplitude modulation of a light source and beam scanning without using a diffraction grating and a spatial light modulator (SLM), thereby improving the simplicity and robustness of a microscope system, and may improve the controllability of structured illumination generation, making it easy to implement structured illumination in a confocal detection method, thereby improving optical-sectioning performance.

### BRIEF DESCRIPTION OF DRAWINGS

FIG. 1 is a block diagram illustrating a configuration of a microscope apparatus, according to an embodiment.
FIG. 2 is a diagram illustrating an example of a microscope apparatus, according to an embodiment.
FIG. 3 is a diagram illustrating another example of a microscope apparatus, according to an embodiment.
FIG. 4 is a diagram illustrating another example of a microscope apparatus, according to an embodiment.
FIGS. 5A and 5B are block diagrams illustrating a light source portion of a microscope apparatus, according to an embodiment.
FIGS. 6 to 9 are diagrams illustrating examples of light source modulation, according to an embodiment.
FIGS. 10 to 12 are diagrams illustrating examples of a structured illumination pattern, according to an embodiment.
FIG. 13 is a diagram illustrating control for structured illumination continuous capturing in the detection of a wide-field method, according to an embodiment.
FIG. 14 is a diagram illustrating synchronization and velocity control of a camera and a scanner for structured illumination imaging in the detection of a rolling shutter-based line field method, according to an embodiment.
FIGS. 15A and 15B are diagrams illustrating a rolling line width setting condition of a camera for structured illumination imaging in the detection of a rolling shutter-based line field method.
FIG. 16 is a diagram illustrating control for high-frequency structured illumination imaging in the detection of a rolling shutter-based line field method, according to an embodiment.
FIG. 17 is a diagram illustrating control for structured illumination imaging in the detection of a multi-line camera-based line field method, according to an embodiment.
FIG. 18 is a diagram illustrating a sensor width in the detection of a multi-line camera-based line field method, according to an embodiment.
FIGS. 19 and 20 are diagrams illustrating examples of control for phase change, according to an embodiment.
FIG. 21 illustrates a comparison image before and after structured illumination is applied, according to an embodiment.
FIG. 22 is a diagram illustrating control for changing structured illumination of a microscope apparatus, according to an embodiment.
FIG. 23 is a flowchart illustrating an operating method of a microscope apparatus that generates structured illumination, according to an embodiment.

### BEST MODE FOR CARRYING OUT THE INVENTION

The following detailed structural or functional description is provided as an example only and various alterations and modifications may be made to the embodiments. Accordingly, the embodiments are not construed as limited to the disclosure and should be understood to include all changes, equivalents, and replacements within the idea and the technical scope of the disclosure.

Although terms, such as first, second, and the like are used to describe various components, the components are not limited to the terms. These terms should be used only to distinguish one component from another component. For example, a first component may be referred to as a second component, and similarly the second component may also be referred to as the first component.

It should be noted that if one component is described as being "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which the present disclosure pertains. Terms, such as those defined in commonly used dictionaries, should be construed to have meanings matching with contextual meanings in the relevant art, and are not to be construed to have an ideal or excessively formal meaning unless otherwise defined herein.

Hereinafter, the embodiments will be described in detail with reference to the accompanying drawings. When describing the embodiments with reference to the accompanying drawings, like reference numerals refer to like components, and any repeated description related thereto will be omitted.

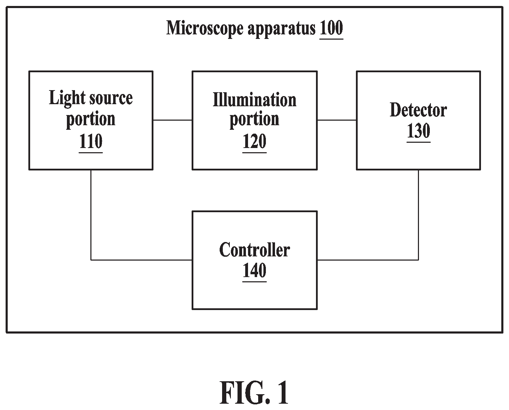

FIG. 1 is a block diagram illustrating a configuration of a microscope apparatus, according to an embodiment.

Referring to FIG. 1, a microscope apparatus 100 according to an embodiment may include a light source portion 110, an illumination portion 120, a detector 130, and a controller 140. The illumination portion 120 may generate (or form) periodic structured illumination on a sample, thereby being expressed differently as a structured illumination portion. Although not shown in FIG. 1, the microscope apparatus 100 may further include a stage on which the sample is placed (or positioned). The stage may be moved in the x-axis, y-axis, and z-axis directions by the controller 140.

The light source portion 110 may include, but is not limited thereto, a light source, such as a laser diode, a continuous wave (CW) laser, a pulse laser, a light-emitting diode (LED), and the like, for example.

The light source portion 110 may modulate an optical signal of a light source to generate a modulated optical signal and output the modulated optical signal. For example, the light source portion 110 may perform first modulation (e.g., amplitude modulation (AM)) on the optical signal to generate the modulated optical signal of a predetermined waveform. The modulated optical signal may include, but is not limited thereto, a pulse waveform, a sine waveform, a triangle waveform, and the like.

The illumination portion 120 may generate a structured illumination pattern (or a periodic structured illumination pattern) on the sample by performing beam scanning based on the output modulated optical signal. For example, the illumination portion 120 may generate a line beam for beam scanning using the output modulated optical signal. The illumination portion 120 may generate a periodic structured illumination pattern (e.g., a line structured illumination pattern and the like) on a focal plane of the sample by illuminating the generated line beam on the sample through a plurality of lenses (e.g., a scan lens, a tube lens, an objective lens, and the like).

When illumination is performed on the sample, an optical signal may be reflected from the sample or an optical signal transmitted through the sample may be generated. The detector 130 may collect an optical signal (e.g., an optical signal reflected from the sample or an optical signal transmitted through the sample) from the sample and may obtain an image of the sample based on the collected optical signal.

The controller 140 may control at least one of the light source portion 110, the illumination portion 120 (e.g., a scanner), or the detector 130 (e.g., a camera (or an image sensor)). As described below, the controller 140 may control the light source portion 110 so that a time delay occurs in the modulated optical signal. The controller 140 may control a scanner to change the period of the structured illumination pattern. The controller 140 may control the light source portion 110, the scanner, and the camera according to the condition to implement line confocal structured illumination.

The controller 140 may control the illumination portion 120 so that the illumination portion 120 may perform beam scanning. For example, the illumination portion 120 may include a first lens capable of generating a line beam for performing beam scanning. The controller 140 may control the scanner so that a position of an optical axis of the line beam is adjusted. According to this control, the line beam may be periodically illuminated on the sample, and the periodic structured illumination (e.g., a striped pattern) may be generated on the sample.

The controller 140 may synchronize the illumination portion 120 with the detector 130. For example, the detector 130 may include an image sensor based on a rolling shutter. The controller 140 may synchronize the beam scanning of the illumination portion 120 with the rolling scanning of the image sensor based on a rolling shutter.

The controller 140 may generate a high-quality and/or high-resolution image of the sample using the images received from the detector 130. As described below, the controller 140 may receive images (e.g., optical-sectioning images) having various phases of the sample from the detector 130 and generate a high-quality image (e.g., an improved optical-sectioned image) using the received images.

The existing structured illumination microscope apparatus may use a diffraction-based grating element, a deformable mirror device (DMD), a spatial light modulator (SLM), and the like to generate periodic structured illumination on a sample. The microscope apparatus 100 according to an embodiment may generate the periodic structured illumination on the sample using modulation (e.g., AM) of a light source and beam scanning without using a diffraction-based grating element, a DMD, and an SLM. Accordingly, an embodiment may simplify the microscope system compared to the existing structured illumination microscope system, make the microscope system robust compared to the existing structured illumination microscope system, and improve system controllability. According to an embodiment, a line confocal-based structured illumination microscope may be simply implemented with improved controllability.

The microscope apparatus 100 according to an embodiment may be applied to each of a wide-field fluorescence microscopy apparatus and a line confocal fluorescence microscopy apparatus, thereby implementing each of a wide-field structured illumination fluorescence microscopy apparatus and a line confocal structured illumination fluorescence microscopy apparatus. Embodiments are not limited thereto, the microscope apparatus 100 according to an embodiment may be applied to any imaging apparatus (or a microscope apparatus) in which the intensity of a signal reflected from a sample is changed according to the intensity of illumination of the sample. For example, the microscope apparatus 100 may be applied to a multi-photon (e.g., two-photon, three-photon, and the like) imaging apparatus (or a multi-photon microscope apparatus), an optical microscope apparatus (e.g., a bright-field microscope apparatus, a dark-field microscope apparatus, a phase contrast microscope apparatus, a polarizing microscope apparatus, and the like), a photoluminescence (PL) imaging apparatus, a light-sheet microscope apparatus, a thermal reflectance imaging apparatus, a photothermal reflectance imaging apparatus (or a photothermal reflectance microscope apparatus), and the like.

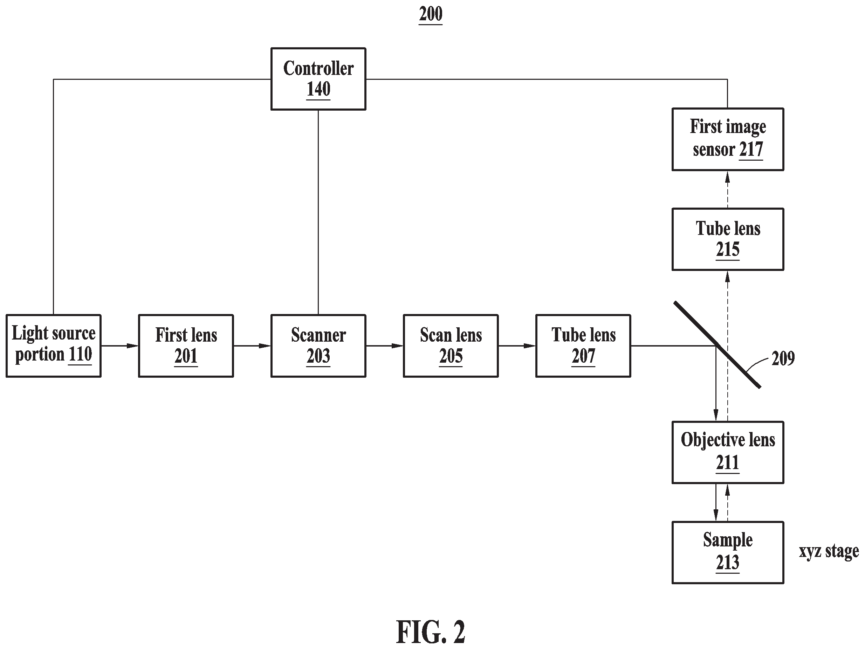

FIG. 2 is a diagram illustrating an example of a microscope apparatus, according to an embodiment.

FIG. 2 illustrates an example of the microscope apparatus 100 of FIG. 1.

A microscope apparatus 200 shown in FIG. 2 may correspond to a wide-field microscope apparatus capable of generating a periodic structured illumination pattern on a sample 213 using modulation of the light source portion 110 and beam scanning of the illumination portion 120. That is, the microscope apparatus 200 shown in FIG. 2 may be a microscope apparatus for the detection of a wide-field method without a confocal function.

Referring to FIG. 2, the microscope apparatus 200 may include the light source portion 110, a first lens 201, a scanner 203, a scan lens 205, a tube lens 207, a first mirror 209, an objective lens 211, a tube lens 215, a first image sensor 217, and the controller 140.

The first lens 201, the scanner 203, the scan lens 205, the tube lens 207, the first mirror 209, and the objective lens 211 of FIG. 2 may be included in the illumination portion 120 of FIG. 1.

The objective lens 211, the tube lens 215, and the first image sensor 217 of FIG. 2 may be included in the detector 130 of FIG. 1. In the example shown in FIG. 2, the illumination portion 120 and the detector 130 may share the objective lens 211. However, embodiments are not limited thereto, in some embodiments, the detector 130 may not share the objective lens 211 with the illumination portion 120 and may include a separate objective lens. The detector 130 may collect an optical signal of a sample through the separate objective lens.

The microscope apparatus 200 may irradiate the sample 213 with a modulated optical signal that is output by the light source portion 110 at the lower end of the objective lens 211 through the first lens 201 (e.g., a cylindrical lens or a Powell lens), the scanner 203, the scan lens 205, the tube lens 207, and the objective lens 211. For example, the microscope apparatus 200 may generate a line beam that performs scanning in a direction that is orthogonal to the focal plane of the scan lens 205 using the first lens 201 and the scanner 203 and may reduce (or focus) the line beam according to the illumination magnification Mi through the tube lens 207 and the objective lens 211 and then illuminate the line beam on the sample 213. Here, the illumination magnification Mi may represent a magnification determined through the magnification of the tube lens 207 and the magnification of the objective lens 211. The optical signal reflected from the sample 213 may pass through the objective lens 211, the first mirror 209, and the tube lens 215 and be transmitted to the first image sensor 217. The first image sensor 217 may obtain an image of the sample based on the signal passing through the objective lens 211, the first mirror 209, and the tube lens 215. For example, the optical signal reflected from the sample 213 may be magnified according to a detection magnification Md through the objective lens 211 and the tube lens 215 and may be detected by the first image sensor 217, and the first image sensor 217 may obtain an image of the sample 213 based on the detected optical signal. Hereinafter, the microscope apparatus 200 is described in more detail with reference to FIG. 2.

The controller 140 may synchronize the first image sensor 217 with the scanner 203.

The light source portion 110 may modulate an optical signal and output a modulated optical signal. For example, the controller 140 may control the light source portion 110 so that the light source portion 110 may output the modulated optical signal.

The first lens 201 may focus the output modulated optical signal on the line beam.

The scanner 203 may adjust, to perform beam scanning, a position of an optical axis of a signal (e.g., a line beam) passing through the first lens 201 or a position of a point at which the line beam is illuminated (or irradiated) on the sample 213. The scanner 203 may include, but is not limited thereto, an x-axis Galvano mirror, an acousto-optic deflector, and the like. The scanner 203 may deflect the line beam traveling along the optical axis.

The scan lens 205 may focus a signal (e.g., a deflected line beam) passing through the scanner 203. A signal passing through the scan lens 205 may be incident on the tube lens 207.

The tube lens 207 may cause the signal (e.g., a focused deflected line beam) passing through the scan lens 205 to be incident on the objective lens 211.

The objective lens 211 may focus a signal passing through the tube lens 207 and illuminate the signal on the sample 213. The signal focused by the objective lens 211 may be illuminated on the sample 213 in an axial direction, and the position of the optical axis may be adjusted by the scanner 203. Accordingly, a periodic structured illumination pattern (e.g., a line structured illumination pattern (or a stripe pattern)) may be generated (or formed) on the sample 213.

When the objective lens 211 focuses the signal passing through the tube lens 207 and illuminates the signal on the sample 213, for example, an optical signal may be reflected from the sample 213. The objective lens 211 may collect the optical signal reflected from the sample 213.

The reflected optical signal may pass through the objective lens 211, the first mirror 209 may transmit the signal passing through the objective lens 211, and the signal transmitted through the first mirror 209 may be incident on the tube lens 215. The first image sensor 217 may detect the signal passing through the tube lens 215. The optical signal reflected from the sample 213 may be magnified by the detection magnification Md by the objective lens 211 and the tube lens 215 and be detected by the first image sensor 217. The detection magnification Md may represent a magnification determined by the magnification of the objective lens 211 and the magnification of the tube lens 215.

The first image sensor 217 may obtain an image (e.g., a two-dimensional (2D) fluorescence image) of the sample 213 based on the detected signal. The obtained image may correspond to an image having a 0-degree phase, for example. The first image sensor 217 may include, but is not limited thereto, a charge-coupled device (CCD) sensor or a complementary metal-oxide-semiconductor (CMOS) sensor, for example.

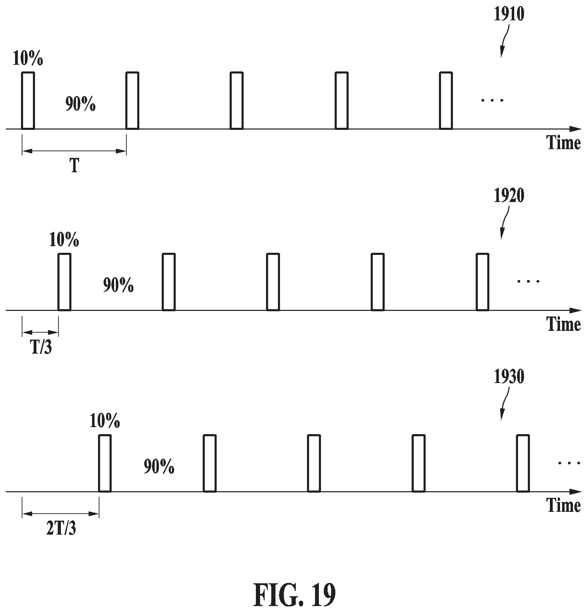

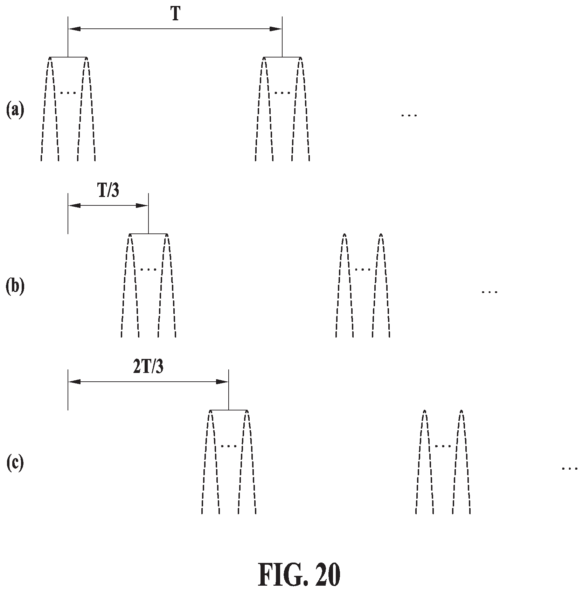

As described below with reference to FIGS. 19 and 20, the controller 140 may control the light source portion 110 so that a time delay occurs in the modulated optical signal. The illumination portion 120 may perform beam scanning based on the modulated optical signal in which the time delay occurs and may generate a structured illumination pattern on the sample 213. The detector 130 may collect a first signal from the sample 213 and may obtain an image (or an image delayed by a first phase) having a first phase (e.g., 120 degrees) of the sample 213 based on the collected first signal. The controller 140 may control the light source portion 110 so that a time delay occurs again in the modulated optical signal in which the time delay occurs. The illumination portion 120 may perform beam scanning based on the modulated optical signal in which the time delay occurs again and may generate the structured illumination pattern on the sample 213. The detector 130 may collect a second signal from the sample and may obtain an image (or an image delayed by a second phase) having a second phase (e.g., 240 degrees) of the sample based on the collected second signal.

Although images having three different phases are described as examples, this is only an example, and the microscope apparatus 200 may obtain images having three or more different phases.

The controller 140 may receive images having various phases of the sample from the detector 130 and may generate a high-quality image (e.g., an improved optical-sectioned image) using the received images.

The controller 140 may move a stage of the sample 213 in a z-axis direction, and a signal reflected from the sample 213 of the moved stage may pass through an optical path of the objective lens 211, the first mirror 209, and the tube lens 215, and the first image sensor 217 may obtain an image of the sample 213 by detecting the signal passing through the optical path of the objective lens 211, the first mirror 209, and the tube lens 215. In addition, the first image sensor 217 may obtain phase-delayed images similar to those described above. The controller 140 may generate a high-quality image on the moved z-axis using the images obtained by the first image sensor 217.

The microscope apparatus 200 may obtain images having various phases at each designated position of the z-axis and generate a high-quality image at each designated position of the z-axis using the obtained images. The microscope apparatus 200 may generate a three-dimensional (3D) image of the sample using the high-quality image at each designated position of the z-axis.

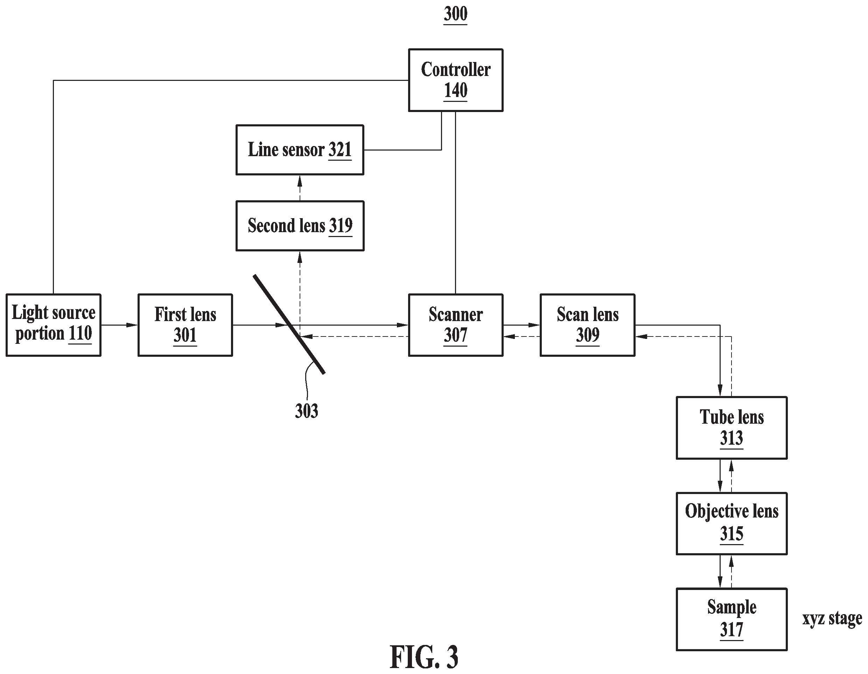

FIG. 3 is a diagram illustrating another example of a microscope apparatus, according to an embodiment.

FIG. 3 illustrates another example of the microscope apparatus 100 of FIG. 1.

A microscope apparatus 300 shown in FIG. 3 may correspond to a line confocal microscope apparatus capable of generating a periodic structured illumination pattern on a sample 317 using modulation of the light source portion 110 and beam scanning of the illumination portion 120. As described below, the microscope apparatus 300 of FIG. 3 may include a line sensor 321 (e.g., a multi-line camera or a multi-line sensor). The microscope apparatus 300 of FIG. 3 may be expressed differently as a microscope apparatus for the detection of a multi-line camera-based line field method.

Referring to FIG. 3, the microscope apparatus 300 may include the light source portion 110, a first lens 301, a first mirror 303, a scanner 307, a scan lens 309, a tube lens 313, an objective lens 315, a second lens 319, the line sensor 321, and the controller 140.

In an embodiment, the first lens 301, the first mirror 303, the scanner 307, the scan lens 309, the tube lens 313, and the objective lens 315 of FIG. 3 may be included in the illumination portion 120 of FIG. 1, and the scanner 307, the scan lens 309, the tube lens 313, the objective lens 315, the second lens 319, and the line sensor 321 of FIG. 3 may be included in the detector 130. In the example shown in FIG. 3, the illumination portion 120 and the detector 130 may share the scanner 307, the scan lens 309, the tube lens 313, and the objective lens 315.

The microscope apparatus 300 may irradiate the sample 317 with a modulated optical signal that is output by the light source portion 110 through the first lens 301 (e.g., a cylindrical lens or a Powell lens), the first mirror 303, the scanner 307, the scan lens 309, the tube lens 313, and the objective lens 315. For example, the microscope apparatus 300 may generate a line beam that perform scanning in a direction that is orthogonal to the focal plane of the scan lens 309 using the first lens 301 and the scanner 307 and may reduce (or focus) the line beam according to the illumination magnification Mi through the second mirror 311, the tube lens 313, and the objective lens 315 and then illuminate the line beam on the sample 317.

The microscope apparatus 300 may obtain an image of the sample by transmitting an optical signal reflected from the sample 317 to the line sensor 321 through an optical path of the objective lens 315, the tube lens 313, the scan lens 309, the scanner 307, the first mirror 303, and the second lens 319 (e.g., a condensing lens). For example, the optical signal reflected from the sample 317 may be magnified according to the detection magnification Md by the objective lens 315 and the tube lens 313 and be descanned by the scan lens 309 and the scanner 307 so that the optical signal may be aligned in an optical axis and incident on the second lens 319. The signal aligned in the optical axis may be focused on the line sensor 321 after passing through the second lens 319. An in-focus signal of the focal plane, except for an out-focus signal out of the focal plane of the sample 317, may be focused on the line sensor 321. The line sensor 321 may obtain an image of the sample 317 by detecting the in-focus signal of the focal plane. Hereinafter, the microscope apparatus 300 is described in more detail with reference to FIG. 3.

The controller 140 may synchronize the line sensor 321 with the scanner 307.

The light source portion 110 may modulate an optical signal and output a modulated optical signal. For example, the controller 140 may control the light source portion 110 so that the light source portion 110 may output the modulated optical signal.

The first lens 301 may focus the output modulated optical signal on the line beam.

The first mirror 303 may pass a signal passing through the first lens 301. The first mirror 303 may include, for example, a dichroic mirror.

The scanner 307 may adjust, to perform beam scanning, a position of an optical axis of the signal passing through the first lens 301 or a position of a point at which the signal passing through the first lens 301 is illuminated (or irradiated) on the sample 213. The scanner 307 may include, but is not limited thereto, an x-axis Galvano mirror, an acousto-optic deflector, and the like. The scanner 307 may deflect the line beam traveling along the optical axis.

The scan lens 309 may focus a signal (e.g., a deflected line beam) passing through the scanner 307. A signal passing through the scan lens 309 may be incident on the tube lens 313.

The objective lens 315 may focus a signal passing through the tube lens 313 and illuminate the signal on the sample 317. The focused signal may be illuminated on the sample 317 in an axial direction, and the position of the optical axis may be adjusted by the scanner 307. Accordingly, a periodic structured illumination pattern (e.g., a line structured illumination pattern (or a stripe pattern)) may be generated (or formed) on the sample 317.

When the objective lens 315 focuses the signal passing through the tube lens 313 and illuminates the signal on the sample 317, for example, an optical signal may be reflected from the sample 317. The objective lens 315 may collect the optical signal reflected from the sample 317.

The reflected optical signal may pass through an optical path of the objective lens 315, the tube lens 313, the scan lens 309, the scanner 307, the first mirror 303, and the second lens 319. Here, the reflected optical signal may be magnified by the detection magnification Md by the objective lens 315 and the tube lens 313, and the detection magnification Md may represent a magnification determined by the magnification (or a focal length) of the objective lens 315 and the magnification (or a focal length) of the tube lens 313.

The line sensor 321 may detect the signal transmitted through the optical path of the objective lens 315, the tube lens 313, the scan lens 309, the scanner 307, the first mirror 303, and the second lens 319. The line sensor 321 may include a multi-line sensor. The number of pixels of the line sensor 321 may be, for example, 2,048 × 128 or 2,048 × 1 but is not limited thereto.

The line sensor 321 may obtain an image (e.g., a 2D image) of the sample 213 based on the detected signal.

The controller 140 may move a stage of the sample 317 in a z-axis direction, and a signal reflected from the sample 317 of the moved stage may be transmitted to the line sensor 321 through the optical path of the objective lens 315, the tube lens 313, the scan lens 309, the scanner 307, the first mirror 303, and the second lens 319. The line sensor 321 may obtain an image of the sample 317 by detecting the signal transmitted through the optical path. The controller 140 may obtain a 3D image (e.g., a 3D high-resolving power and high-resolution image) of the sample using the images obtained by the line sensor 321.

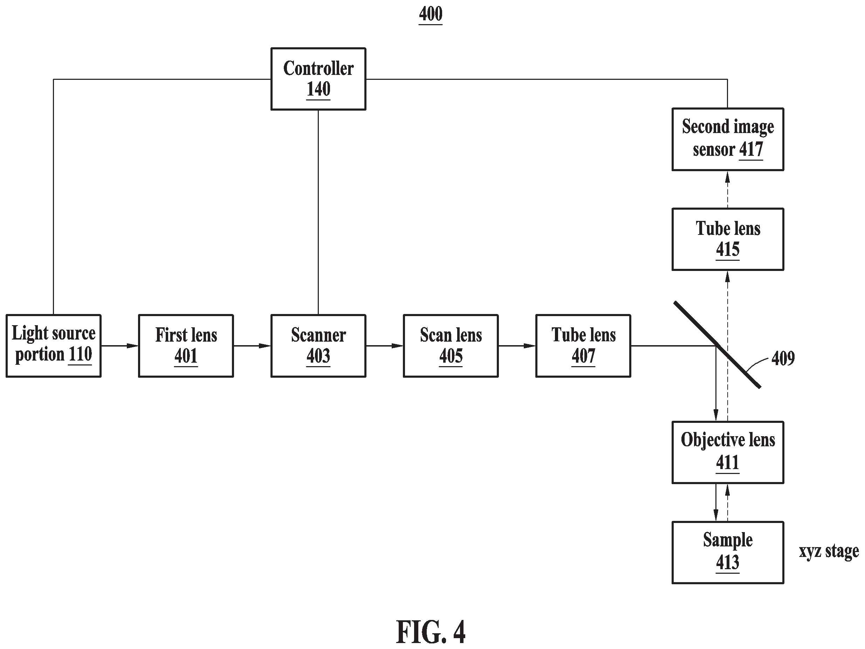

FIG. 4 is a diagram illustrating another example of a microscope apparatus, according to an embodiment.

FIG. 4 illustrates another example of the microscope apparatus 100 of FIG. 1.

A microscope apparatus 400 shown in FIG. 4 may generate a periodic structured illumination pattern on the sample 213 using modulation of the light source portion 110 and beam scanning of the illumination portion 120. As described below, the microscope apparatus 400 of FIG. 4 may include an image sensor based on a rolling shutter, and thus, may be otherwise expressed as a microscope apparatus for the detection of a rolling shutter-based line field method.

Referring to FIG. 4, the microscope apparatus 400 may include the light source portion 110, a first lens 401, a scanner 403, a scan lens 405, a tube lens 407, a first mirror 409, an objective lens 411, a tube lens 415, a second image sensor 417, and the controller 140.

The first lens 401, the scanner 403, the scan lens 405, the tube lens 407, and the objective lens 411 of FIG. 4 may be included in the illumination portion 120 of FIG. 1, and the objective lens 411, the tube lens 415, and the second image sensor 417 of FIG. 4 may be included in the detector 130 of FIG. 1. In the example shown in FIG. 4, the illumination portion 120 and the detector 130 may share the objective lens 411.

The second image sensor 417 may be an image sensor based on a rolling shutter.

The microscope apparatus 400 may irradiate a sample 413 with a modulated optical signal that is output by the light source portion 110 through the first lens 401 (e.g., a cylindrical lens or a Powell lens), the scanner 403, the scan lens 405, the tube lens 407, the first mirror 409, and the objective lens 411. For example, the microscope apparatus 400 may generate a line beam that performs scanning in a direction that is orthogonal to the focal plane of the scan lens 405 using the first lens 401 and the scanner 403 and may reduce (or focus) the line beam according to the illumination magnification Mi through the tube lens 407, the first mirror 409, and the objective lens 411 and then illuminate the line beam on the sample 413.

The optical signal reflected from the sample 413 may pass through the objective lens 411, the first mirror 409, and the tube lens 415 and be transmitted to the second image sensor 417, and the second image sensor 417 may obtain an image of the sample based on the transmitted signal. For example, the optical signal reflected from the sample 413 may be magnified according to the detection magnification Md through the objective lens 411 and the tube lens 415 and be detected by the second image sensor 417, and the second image sensor 417 may obtain an image of the sample 413 based on the detected optical signal. Hereinafter, the microscope apparatus 400 is described in more detail with reference to FIG. 4.

The controller 140 may synchronize the second image sensor 417 with the scanner 403. The controller 140 may synchronize the rolling scanning of the second image sensor 417 with the beam scanning of the scanner 403.

The light source portion 110 may modulate an optical signal and output a modulated optical signal. For example, the controller 140 may control the light source portion 110 so that the light source portion 110 may output the modulated optical signal.

The first lens 401 may focus the output modulated optical signal on the line beam.

The scanner 403 may adjust, to perform beam scanning, a position of an optical axis of a signal (e.g., a line beam) passing through the first lens 401 or a position of a point at which the line beam is illuminated (or irradiated) on the sample 413. The scanner 403 may include, but is not limited thereto, an x-axis Galvano mirror, an acousto-optic deflector, and the like. The scanner 403 may deflect the line beam traveling along the optical axis.

The scan lens 405 may focus a signal (e.g., a deflected line beam) passing through the scanner 403. A signal passing through the scan lens 405 may be incident on the tube lens 407.

The tube lens 407 may incident the signal (e.g., a focused deflected line beam) passing through the scan lens 405 on the objective lens 411.

The objective lens 411 may focus a signal passing through the tube lens 407 and illuminate the signal on the sample 413. The focused signal may be illuminated on the sample 413 in an axial direction, and the position of the optical axis may be adjusted by the scanner 403. Accordingly, a periodic structured illumination pattern (e.g., a line structured illumination pattern (or a stripe pattern)) may be generated (or formed) on the sample 413.

When the objective lens 411 focuses the signal passing through the tube lens 407 and illuminates the signal on the sample 413, for example, an optical signal may be reflected from the sample 413. The objective lens 411 may collect the optical signal reflected from the sample 413.

The reflected optical signal may pass through the objective lens 411, the first mirror 409 may transmit the signal passing through the objective lens 411, and the signal transmitted through the first mirror 09 may be incident on the tube lens 415. The second image sensor 417 may detect the signal passing through the tube lens 415. The optical signal reflected from the sample 413 may be magnified by the detection magnification Md by the objective lens 411 and the tube lens 415 and detected by the second image sensor 417. The detection magnification Md may represent a magnification determined by the magnification (or a focal length) of the objective lens 411 and the magnification (or a focal length) of the tube lens 415.

The second image sensor 417 may obtain an image (e.g., a 2D image) of the sample 413 based on the detected signal.

The microscope apparatus 400 may obtain images having various phases at each position of the z-axis while moving a stage in a z-axis direction, similar to the microscope apparatus 200 of FIG. 2. The microscope apparatus 400 may obtain a high-quality image (e.g., an improved optical-sectioned image) of the sample 413 using the images having various phases at each position of the z-axis. The microscope apparatus 400 may generate a 3D image of the sample 413 using the high-quality image at each position of the z-axis.

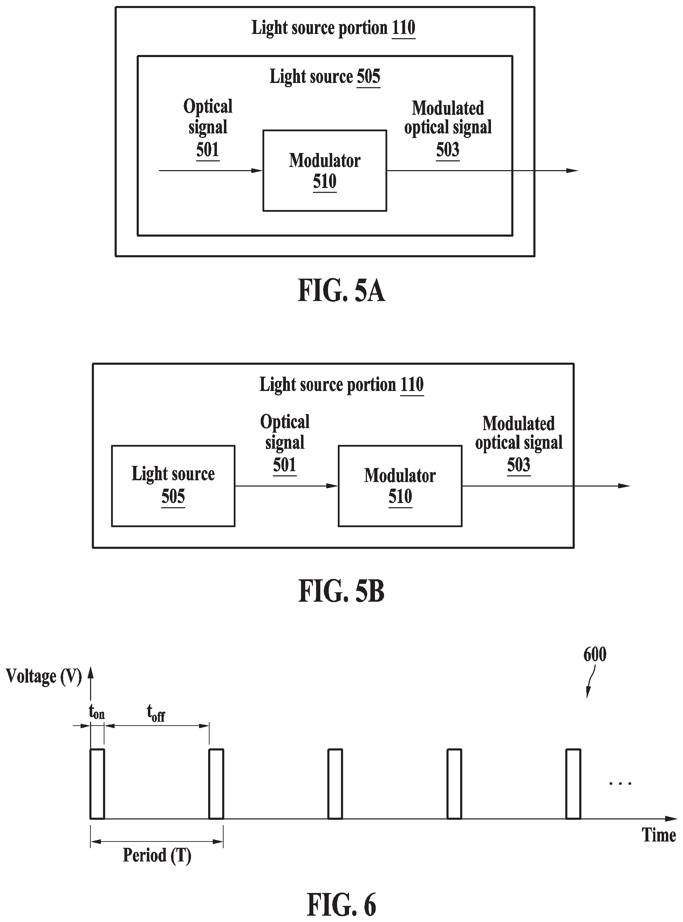

FIGS. 5A and 5B are block diagrams illustrating a light source portion of a microscope apparatus, according to an embodiment.

In the example shown in FIG. 5A, the light source portion 110 may include a light source 505, and the light source 505 may include a modulator 510. In the example shown in FIG. 5B, the modulator 510 may not be included in the light source 505 and may be positioned at an output terminal of the light source portion 110.

The modulator 510 may perform modulation (e.g., AM) on an optical signal 501 to generate a modulated optical signal 503. Examples of light source modulation (or the modulated optical signal 503) are described with reference to FIGS. 6 to 9.

FIGS. 6 to 9 are diagrams illustrating examples of light source modulation, according to an embodiment.

In the example shown in FIG. 6, a modulated optical signal 600 may be a pulse waveform.

The modulated optical signal 600 may be output during tₒₙ and may not be output during t_{off}. For example, light may be consecutively output during tₒₙ and may not be output during t_{off}. The longer tₒₙ is, the longer the light may be output.

tₒₙ may correspond to a duty cycle, and the duty ratio may be tₒₙ/T.

tₒₙ + t_{off} may be a period T of the modulated optical signal 600.

The light source portion 110 may output the modulated optical signal 600, and the illumination portion 120 may provide pulse illumination to a sample by performing beam scanning based on the modulated optical signal 600.

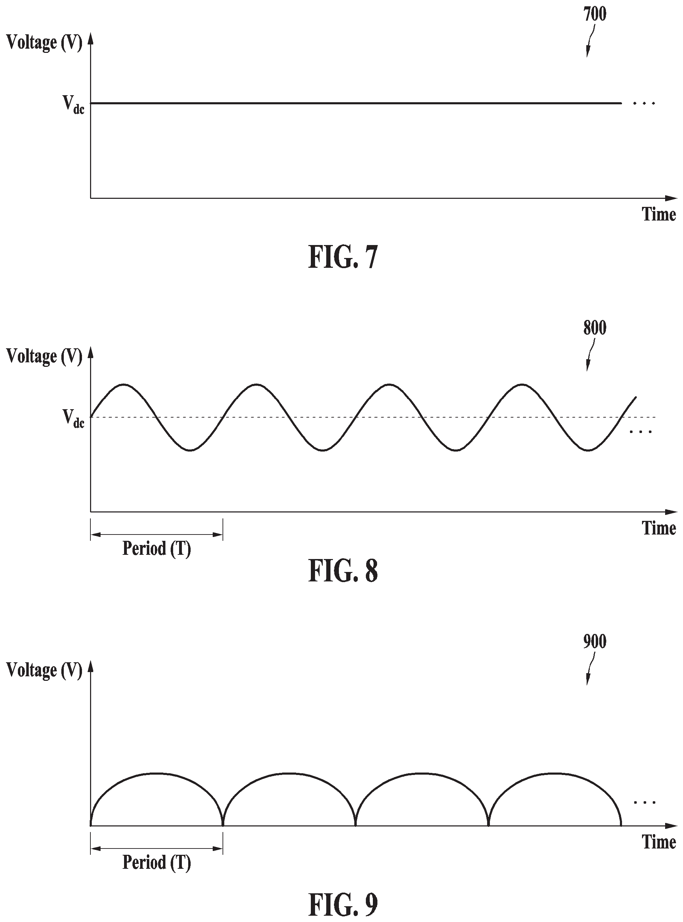

In an embodiment, the controller 140 may adjust the duty ratio to 1. This may be a case in which modulation is not performed. When the duty ratio is 1, the microscope apparatus 100 may provide uniform illumination to the sample, as in the example shown in FIG. 7. In the example shown in FIG. 7, the light source portion 110 may output an unmodulated uniform optical signal 700, and the illumination portion 120 may provide the uniform illumination to the sample.

The modulated optical signal 503 is not limited to the modulated optical signal 600 of the pulse waveform shown in FIG. 6.

In the example shown in FIG. 8, a modulated optical signal 800 may be a sine waveform.

The light source portion 110 may output the modulated optical signal 800, and the illumination portion 120 may provide sine-structured illumination to the sample by performing beam scanning based on the modulated optical signal 800.

In the example shown in FIG. 9, a modulated optical signal 900 may have a periodic arbitrary shape.

The light source portion 110 may output the modulated optical signal 900, and the illumination portion 120 may provide the sample with periodic arbitrary shape of structured illumination.

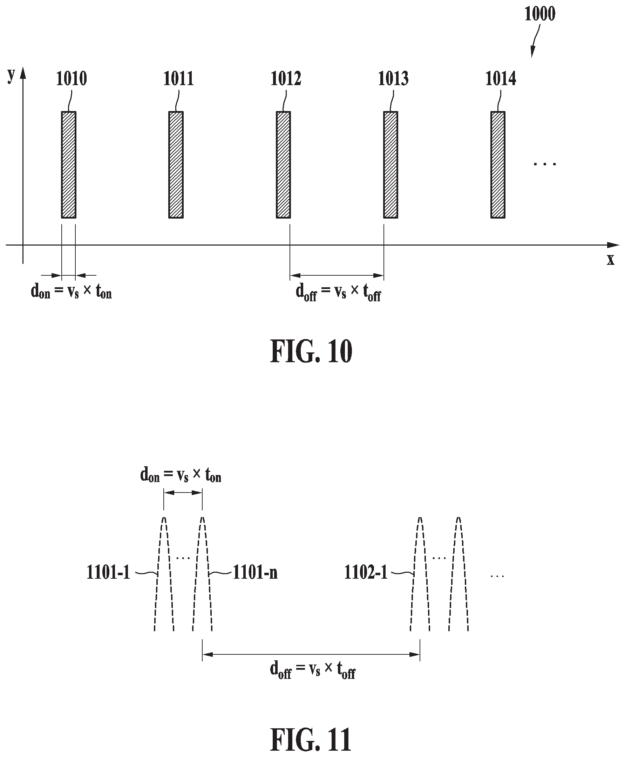

FIGS. 10 to 12 are diagrams illustrating examples of a structured illumination pattern, according to an embodiment.

FIG. 10 illustrates a line structured illumination pattern 1000 (or a stripe pattern and a pulse wave structured illumination pattern) on an xy plane of a sample (e.g., the sample 213 of FIG. 2, the sample 317 of FIG. 3, and the sample 413 of FIG. 4).

The line structured illumination pattern 1000 may correspond to an example of a periodic structured illumination pattern.

When the light source portion 110 outputs the modulated optical signal 600 of FIG. 6, the illumination portion 120 may irradiate the sample with a line-shaped beam, and a stage of the sample may move in an axial direction (e.g., a y-axis direction). Accordingly, line structured illumination 1010 may be generated on the sample.

A scanner (e.g., the scanner 203 of FIG. 2, the scanner 307 of FIG. 3, and the scanner 403 of FIG. 4) may deflect a beam that is incident on the scanner by changing an optical axis of the beam that is incident on the scanner. The illumination portion 120 may irradiate the sample with the deflected beam, and the stage of the sample may move in the axial direction (e.g., a y-axis direction). Accordingly, line structured illumination 1011 may be generated on the sample. In this way, the microscope apparatus 100 may periodically generate line structured illuminations 1010 to 1014 on the sample by performing beam scanning based on the modulated optical signal 600. The line structured illumination pattern 1000 may be formed on the sample.

In the example shown in FIG. 10, the width (or a stripe width) dₒₙ of the line structured illuminations 1010 to 1014 may correspond to the result obtained by multiplying a scan velocity (e.g., a scan velocity in the sample) vₛ of beam scanning by tₒₙ. For example, dₒₙ may be vₛ × tₒₙ (i.e., "dₒₙ = vₛ × tₒₙ"). The distance (or a stripe distance) d_{off} of the line structured illuminations 1010 to 1014 may correspond to the result obtained by multiplying the scan velocity vₛ by t_{off}. For example, d_{off} may be vₛ × t_{off} (i.e., "d_{off} = vₛ × t_{off}").

The line structured illuminations 1010 to 1014 may have repeated light spots. For example, as in the example shown in FIG. 11, the line structured illumination 1010 may have continuously repeating light spots. In FIG. 11, the light spot is illustrated as a dashed line. When a line beam has a Gaussian shape, the light spot may have a Gaussian shape, as in the example shown in FIG. 11. The distance between a peak of a first light spot 1101-1 of the line structured illumination 1010 and a peak of the last light spot 1101-n may correspond to dₒₙ described above. The distance between the peak of the last light spot 1101-n of the line structured illumination 1010 and a peak of a first light spot 1102-1 of the line structured illumination 1011 may correspond to d_{off} described above.

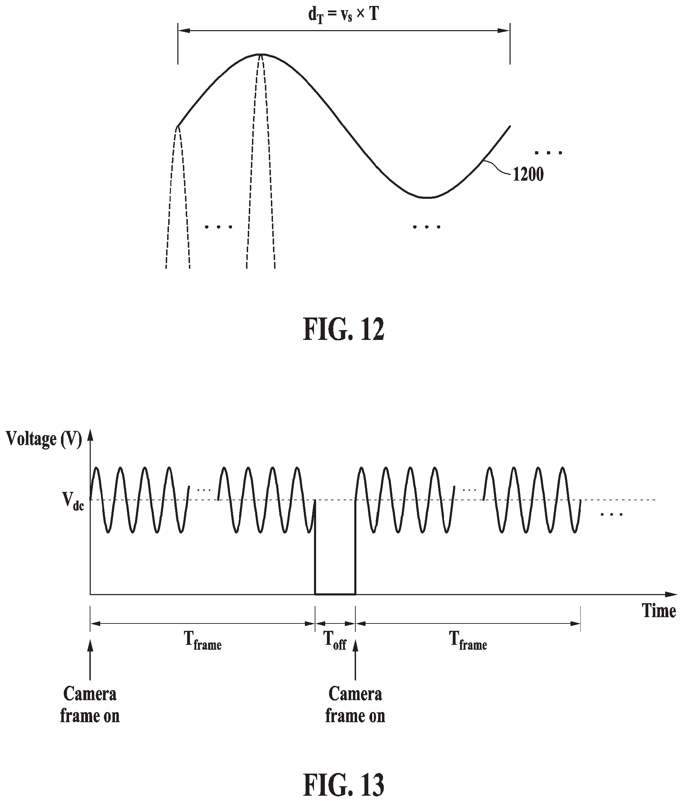

In FIG. 12, when the sine structured illumination described with reference to FIG. 8 is provided to the sample, a sine structured illumination pattern 1200 may be formed on the sample. A spatial period d_{T} of the sine structured illumination pattern 1200 may correspond to a result obtained by multiplying the scan velocity vₛ in the sample of beam scanning and the period T of the modulated optical signal 800 of FIG. 8.

In FIG. 12, the dashed line may represent a light spot. The structured illumination pattern 1200 may have continuously repeating light spots.

FIG. 13 is a diagram illustrating control for structured illumination continuous capturing in the detection of a wide-field method, according to an embodiment.

Referring to FIG. 13, the controller 140 of the microscope apparatus 200 of FIG. 2 may synchronize the detector 130 (e.g., the first image sensor 217) with the illumination portion 120 (e.g., the scanner 203) to align the beginning point of a camera frame with the beginning point of a sine structured illumination pattern (or the modulated optical signal 800) and to align the end point of the camera frame with the end point of the sine structured illumination pattern (or the modulated optical signal 800). During T_{frame}, sine structured illumination may be provided to a sample, and capturing may be performed by a camera (or the first image sensor 217).

In the example shown in FIG. 13, when T_{frame} is terminated, the controller 140 may turn off the light source portion 110 for a time T_{off} required for reloading the camera or scanner so as not to output the modulated optical signal 800 and may turn off the camera so as not to perform capturing. Accordingly, photobleaching and/or phototoxicity of the sample may be reduced.

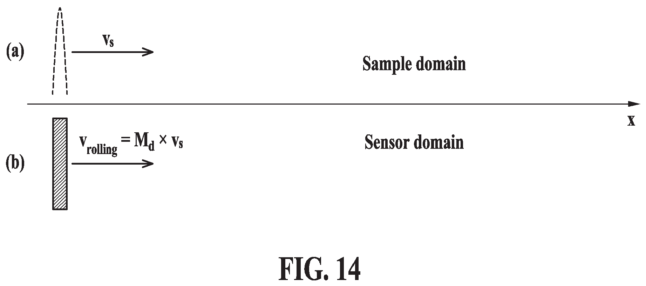

FIG. 14 is a diagram illustrating synchronization and velocity control of a camera and a scanner for structured illumination imaging in the detection of a rolling shutter-based line field method, according to an embodiment.

Referring to FIG. 14, the controller 140 of the microscope apparatus 400 of FIG. 4 may synchronize the second image sensor 417 with the scanner 403 to align the beginning point of a rolling line of the second image sensor 417 with the beginning point of a pulse wave structured illumination pattern (e.g., the line structured illumination pattern 1000 of FIG. 10) and to align a rolling velocity v_{rolling} of the second image sensor 417 with a scan velocity vₛ.

In the example shown in FIG. 14, the rolling velocity v_{rolling} of the second image sensor 417 may correspond to the result obtained by multiplying the scan velocity vₛ in the sample of beam scanning of the scanner 403 by the detection magnification M_{d}. The rolling velocity v_{rolling} may represent the moving velocity of a window of the second image sensor 417. The rolling velocity of the second image sensor 417 may be M_{d} × vₛ.

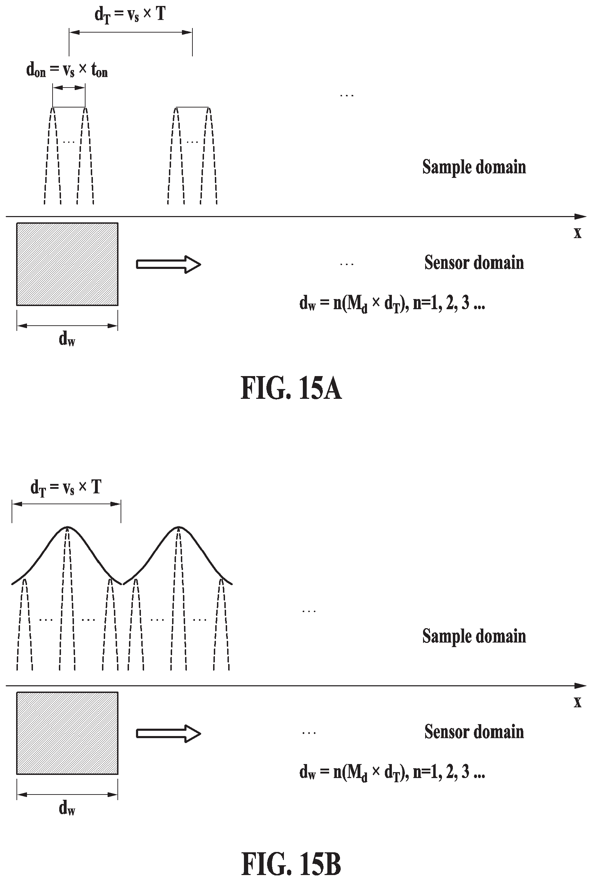

FIGS. 15A and 15B are diagrams illustrating a rolling line width setting condition of a camera for structured illumination imaging in the detection of a rolling shutter-based line field method.

Referring to FIG. 15A, a rolling line width d_{w} (or a width of a window of the second image sensor 417) may be a multiple of a value obtained by multiplying a spatial period d_{T} of a pulse wave structured illumination pattern (e.g., the line structured illumination pattern 1000 of FIG. 10) on a sample by the detection magnification M_{d}. d_{w} may be n(M_{d} × d_{T}) (i.e., d_{w} = n(M_{d} × d_{T})). Here, n may be a natural number (1, 2, 3, ...).

Referring to FIG. 15B, the rolling line width d_{w} (or a width of a window of the second image sensor 417) may be a multiple of a value obtained by multiplying the spatial period d_{T} of a sine structured illumination pattern (e.g., the sine structured illumination pattern 1200 of FIG. 12) on the sample by the detection magnification M_{d}. d_{w} may be n(M_{d} × d_{T}) (i.e., d_{w} = n(M_{d} × d_{T}). Here, n may be a natural number (1, 2, 3, ...).

The pulse wave structured illumination pattern shown in FIG. 15A and the sine structured illumination pattern shown in FIG. 15B are only examples of periodic structured illumination patterns. When a periodic structured illumination pattern is formed on the sample, the rolling line width d_{w} may be set according to the descriptions provided with reference to FIGS. 15A and 15B.

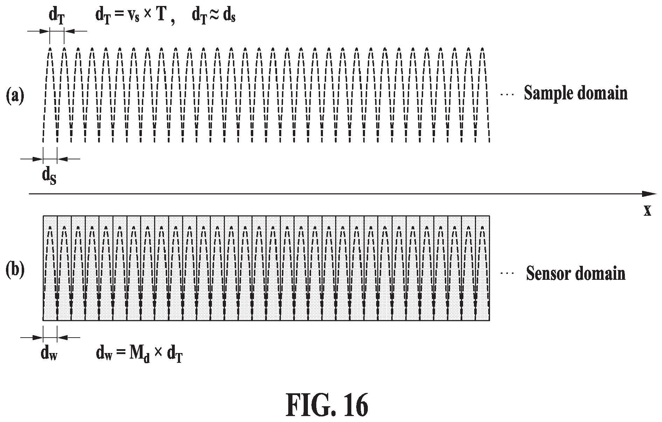

FIG. 16 is a diagram illustrating control for high-frequency structured illumination imaging in the detection of a rolling shutter-based line field method, according to an embodiment.

Referring to FIG. 16, the spatial period d_{T} of a structured illumination pattern may be set to a value that is close to a size d_{S} of a light spot or may be set to be the same as the size d_{S} of the light spot. The rolling line width d_{w} of the second image sensor 417 may be set to a value obtained by multiplying the detection magnification M_{d} by a set high-frequency period (e.g., d_{T}). A duty cycle tₒₙ of the light source portion 110 may be set to be less than or equal to a time corresponding to a width d_{P} of one pixel of the second image sensor 417. Tₒₙ may be less than or equal to dₚ/(M_{d}×Vₛ) (i.e., tₒₙ ≤ dₚ/(M_{d}×Vₛ)), and the duty ratio may be tₒₙ/T.

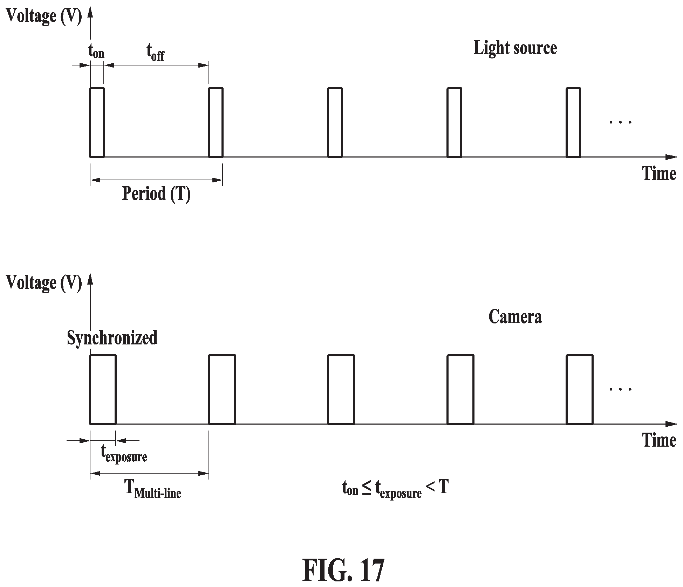

FIG. 17 is a diagram illustrating control for structured illumination imaging in the detection of a multi-line camera-based line field method, according to an embodiment.

Referring to FIG. 17, the controller 140 of the microscope apparatus 300 of FIG. 3 may synchronize the light source portion 110 with a camera (e.g., the line sensor 321) so that an image of one period of a structured illumination pattern may be captured in one camera frame. In the example shown in FIG. 17, the controller 140 may synchronize the light source portion 110 with the line sensor 321 so that the beginning/end points of a period T (or a period of a pulse wave structured illumination pattern) of the modulated optical signal 600 are aligned with the beginning/end points of a frame time T_{Multi-line} of the line sensor 321. That is, in the case of the microscope apparatus 300 of FIG. 3, temporal synchronization between the period of the structured illumination pattern and the capture period of the line sensor 321 may be achieved by the controller 140.

In the example shown in FIG. 17, tₒₙ ≤ tₑₓₚₒₛᵤᵣₑ < T. Here, tₑₓₚₒₛᵤᵣₑ may represent a shutter exposure time of the line sensor 321.

In FIG. 17, the modulated optical signal 600 of the pulse waveform is only an example of a periodic modulated optical signal, and the description provided with reference to FIG. 17 may be applied when the light source portion 110 outputs the periodic modulated optical signal.

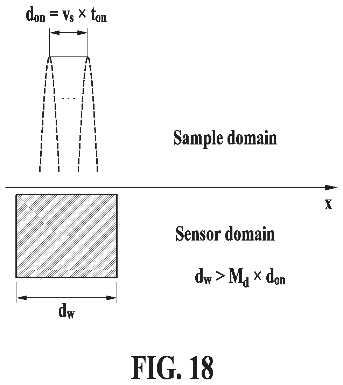

FIG. 18 is a diagram illustrating a sensor width in the detection of a multi-line camera-based line field method, according to an embodiment.

In the example shown in FIG. 18, the light source portion 110 of the microscope apparatus 300 of FIG. 3 may output the modulated optical signal 600 of the pulse waveform, and the illumination portion 120 may generate, on a sample, a periodic structured illumination pattern (e.g., the pulse wave structured illumination pattern 1000 of FIG. 10) corresponding to the modulated optical signal 600.

The detector 130 may collect, from the sample, a signal corresponding to one structured illumination pattern (e.g., the line structured illumination 1010 of FIG. 10). When a spatial width dₒₙ of the collected signal (i.e., a signal corresponding to one structured illumination pattern) is greater than a sensor width d_{w} of the line sensor 321, some of the collected signals may be lost. Accordingly, the sensor width d_{w} of the line sensor 321 may be greater than M_{d} × dₒₙ so that the collected signal (i.e., a signal corresponding to one structured illumination pattern) may be entirely detected by the line sensor 321.

In the example shown in FIG. 18, the modulated optical signal 600 of the pulse waveform is only an example, and the description provided with reference to FIG. 18 may be applied when the light source portion 110 outputs a periodic modulated optical signal.

FIGS. 19 and 20 are diagrams illustrating examples of control for phase change, according to an embodiment.

Referring to FIG. 19, the light source portion 110 may output a modulated optical signal 1910. In the example shown in FIG. 19, the period of the modulated optical signal 1910 may be T, and the duty ratio may be 0.1.

When the light source portion 110 outputs the modulated optical signal 1910, the illumination portion 120 may perform beam scanning based on the modulated optical signal 1910. A periodic structured illumination pattern corresponding to the modulated optical signal 1910 may be generated on a sample. The periodic structured illumination pattern corresponding to the modulated optical signal 1910 may have continuously repeating light spots, and an example thereof is shown in (a) of FIG. 20.

The detector 130 may collect an optical signal reflected from the sample and obtain an image (e.g., an image having a 0-degree phase) of the sample based on the collected optical signal.

The controller 140 may control the light source portion 110 so that a time delay occurs in the modulated optical signal 1910. The light source portion 110 may output a modulated optical signal 1920 in which the time delay occurs (or the modulated optical signal 1920 to which the time delay is applied). When the modulated optical signal 1910 is, for example, m(t), the modulated optical signal 1920 in which the time delay occurs may be, for example, m(t-T/3).

When the light source portion 110 outputs the modulated optical signal 1920, the illumination portion 120 may perform beam scanning based on a modulated optical signal 1120. A periodic structured illumination pattern corresponding to the modulated optical signal 1920 may be generated on the sample. The periodic structured illumination pattern corresponding to the modulated optical signal 1920 may have continuously repeating light spots, and an example thereof is shown in (b) of FIG. 20.

The detector 130 may collect an optical signal (hereinafter, referred to as a "first signal") from the sample and may obtain an image having a first phase based on the collected first signal. The first phase may be, for example, 120 degrees but is not limited thereto. The periodic structured illumination pattern shown in (b) of FIG. 20 may have a time delay of, for example, T/3, and the first signal may also have a time delay of T/3. This time delay may cause a phase change by the first phase. The detector 130 may obtain the image having the first phase based on the collected first signal.

The controller 140 may control the light source portion 110 so that a time delay occurs again in the modulated optical signal 1920 in which the time delay occurs. The light source portion 110 may output a modulated optical signal 1930 in which the time delay occurs again. When the modulated optical signal 1920 is, for example, m(t-T/3), the modulated optical signal 1930 in which the time delay occurs again may be, for example, m(t-2T/3).

When the light source portion 110 outputs the modulated optical signal 1930, the illumination portion 120 may perform beam scanning based on the modulated optical signal 1930. A periodic structured illumination pattern corresponding to the modulated optical signal 1930 may be generated on the sample. The periodic structured illumination pattern corresponding to the modulated optical signal 1930 may have continuously repeating light spots, and an example thereof is shown in (c) of FIG. 20.

The detector 130 may collect an optical signal (hereinafter, referred to as a "second signal") from the sample and may obtain an image having a second phase based on the collected second signal. The second phase may be, for example, 240 degrees but is not limited thereto. The periodic structured illumination pattern shown in (c) of FIG. 20 may have a time delay of, for example, 2T/3, and the second signal may also have a time delay of 2T/3. This time delay may cause a phase change by the second phase. The detector 130 may obtain the image having the second phase based on the collected second signal.

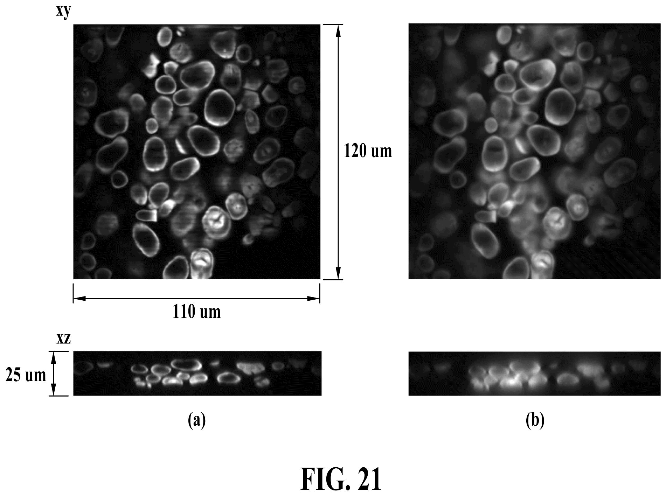

The controller 140 may obtain a high-quality image (e.g., optical-sectioning improvement) using the images (e.g., an image having a 0-degree phase, an image having a first phase, and an image having a second phase) obtained by the detector 130. An example thereof is shown in (a) of FIG. 21.

FIG. 21 illustrates a comparison image before and after structured illumination is applied, according to an embodiment.
(a) of FIG. 21 illustrates an example of a high-quality image with improved optical sectioning, which is obtained by the microscope apparatus 400 using an image having a 0-degree phase, an image having a first phase, and an image having a second phase.
(b) of FIG. 21 illustrates an example of an image obtained only by the conventional rolling shutter-based line confocal microscope apparatus based on uniform illumination of FIG. 7. The image shown in (a) of FIG. 21 may express optical sectioning more clearly than the image shown in (b) of FIG. 21.

Although images having three phases are described with reference to FIGS. 19 to 21, this is only an example, and the microscope apparatus 100 may obtain images having three or more different phases.

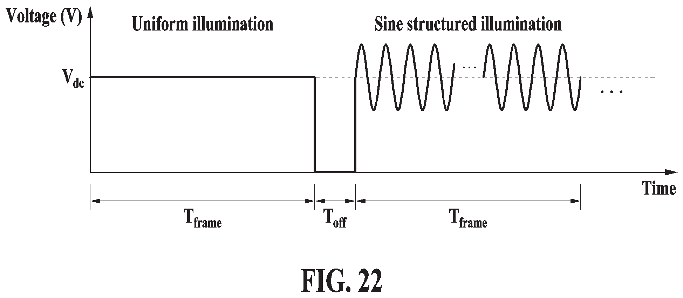

FIG. 22 is a diagram illustrating control for changing structured illumination of a microscope apparatus, according to an embodiment.

Referring to FIG. 22, the microscope apparatus 100 may form different structured illumination for each frame on a sample. In the example shown in FIG. 22, the microscope apparatus 100 may provide uniform illumination to the sample during a first camera frame T_{frame} and obtain an image. After T_{off} elapses, the microscope apparatus 100 may provide periodic structured illumination (e.g., sine structured illumination or the like) to the sample during a second camera frame and obtain an image.

The microscope apparatus 100 may generate a high-quality image using the images obtained from each of the different frames.

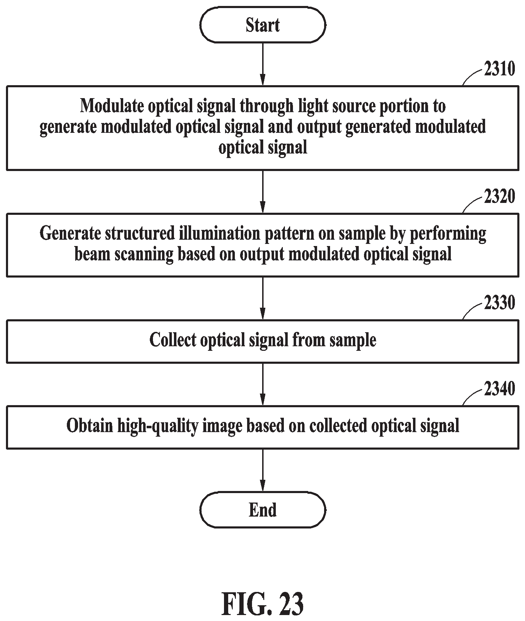

FIG. 23 is a flowchart illustrating an operating method of a microscope apparatus that generates structured illumination, according to an embodiment.

Referring to FIG. 23, in operation 2310, the microscope apparatus 100 may modulate an optical signal through the light source portion 110 to generate a modulated optical signal and output the generated modulated optical signal.

In operation 2320, the microscope apparatus 100 may generate a structured illumination pattern on a sample by performing beam scanning based on the output modulated optical signal. For example, the microscope apparatus 100 may generate a line beam for beam scanning using the output modulated optical signal and may generate the structured illumination pattern (e.g., a pulse wave structured illumination pattern, a sine structured illumination pattern, and the like) on the focal plane of the sample by illuminating the generated line beam on the sample through a plurality of lenses (e.g., a tube lens, an objective lens, and the like).

In operation 2330, the microscope apparatus 100 may collect an optical signal from the sample. For example, the microscope apparatus 100 may collect an optical signal reflected from the sample on which the structured illumination pattern is generated or an optical signal transmitted through the sample.

In operation 2340, the microscope apparatus 100 may obtain a high-quality image based on the collected optical signal.

In an embodiment, the microscope apparatus 100 (e.g., the microscope apparatus 200 of FIG. 2) may synchronize a scanner (e.g., the scanner 203 of FIG. 2) that performs beam scanning with an image sensor (e.g., the first image sensor 217) so that the beginning (e.g., the beginning point of T_{frame} of FIG. 13) and the end (e.g., the end point of T_{frame} of FIG. 13) of a frame of the image sensor (e.g., the first image sensor 217) that obtains an image are aligned with the beginning and the end of the structured illumination pattern, respectively.

In an embodiment, the microscope apparatus 100 (e.g., the microscope apparatus 400 of FIG. 4) may include an image sensor based on a rolling shutter (e.g., the second image sensor 417 of FIG. 4). The microscope apparatus 100 (e.g., the microscope apparatus 400 of FIG. 4) (or the controller 140) may synchronize the scanner 403 that performs beam scanning with the image sensor 417 so that the beginning and velocity (e.g., V_{rolling} of FIG. 14) of a rolling line of the image sensor 417 are aligned with the beginning and velocity of the structured illumination pattern, respectively. A width (e.g., d_{w} of FIGS. 15A and 15B) of the rolling line may correspond to a multiple of a value obtained by multiplying a spatial period (e.g., d_{T} of FIGS. 15A and 15B) of the structured illumination pattern by a first magnification (e.g., M_{d} of FIGS. 15A and 15B). Here, the first magnification may represent a magnification determined based on the magnification of each of an objective lens and a tube lens in the microscope apparatus 400.

In an embodiment, for high-frequency structured illumination imaging of the microscope apparatus 100 (e.g., the microscope apparatus 400 of FIG. 4), the spatial period (e.g., d_{T} of FIG. 16) of the structured illumination pattern may be set to a value that is close to a size (e.g., dₛ of FIG. 16) of a light spot that is consecutively repeated in the structured illumination pattern, the width (e.g., d_{w} of FIG. 16) of the rolling line may correspond to a value obtained by multiplying the set spatial period (e.g., d_{T} of FIG. 16) by the first magnification, and a duty cycle (e.g., tₒₙ described with reference to FIG. 16) of a modulated optical signal may be less than a time corresponding to a width (e.g., dₚ described with reference to FIG. 16) of one pixel of the image sensor based on a rolling shutter.

In an embodiment, the microscope apparatus 100 (e.g., the microscope apparatus 300 of FIG. 3) may include the line sensor 321. The microscope apparatus 100 (e.g., the microscope apparatus 300 of FIG. 3) (or the controller 140) may synchronize the light source portion 110 that outputs a modulated optical signal with the line sensor 321 so that an image corresponding to one period (e.g., T of FIG. 17) of the structured illumination pattern is obtained within one frame (e.g., T_{Multi-line} of FIG. 17) of the line sensor 321. The sensor width (e.g., d_{w} of FIG. 18) of the line sensor 321 may be greater than the width (e.g., dₒₙ of FIG. 18) of one structured illumination in the structured illumination pattern.

In an embodiment, the microscope apparatus 100, 200, 300, or 400 may occur a time delay in a modulated optical signal, generate a structured illumination pattern on a sample by performing beam scanning based on the modulated optical signal in which the time delay occurs, collect a first signal (e.g., a signal reflected from the sample or a signal transmitted through the sample) from the sample, and obtain an image having a first phase of the sample based on the collected first signal. The microscope apparatus 100, 200, 300, or 400 may occur a time delay again in the modulated optical signal in which the time delay occurs, generate the structured illumination pattern on the sample by performing beam scanning based on the modulated optical signal in which the time delay occurs again, collect a second signal (e.g., a signal reflected from the sample or a signal transmitted through the sample) from the sample, and obtain an image having a second phase of the sample based on the collected second signal. The microscope apparatus 100, 200, 300, or 400 may obtain a high-quality image of the sample using the obtained images (e.g., an image having a 0-degree phase, an image having a first phase, an image having a second phase).

In an embodiment, the microscope apparatus 100, 200, 300, or 400 may generate, on the sample, a structured illumination pattern that is different for each frame of an image sensor and obtain an image according to the structured illumination pattern that is different for each frame. The microscope apparatus 100, 200, 300, or 400 may generate a high-quality image using the obtained images.

The descriptions provided with reference to FIGS. 1 to 22 may be applied to the operating method of the microscope apparatus 100 of FIG. 23, and thus, a detailed description thereof is omitted.

The embodiments described herein may be implemented using a hardware component, a software component, and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and generate data in response to execution of the software. For purpose of simplicity, the description of a processing device is used as singular; however, one skilled in the art will appreciate that a processing device may include multiple processing elements and multiple types of processing elements. For example, a processing device may include multiple processors or a processor and a controller. In addition, different processing configurations are possible, such as parallel processors.

The software may include a computer program, a piece of code, an instruction, or combinations thereof, to independently or uniformly instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software is stored and executed in a distributed fashion. The software and data may be stored in a non-transitory computer-readable recording medium.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) discs and digital video discs (DVDs); magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, and/or replaced or supplemented by other components or their equivalents.

Therefore, other implementations, other embodiments, and/or equivalents of the claims are within the scope of the following claims.

## Claims

1. A microscope apparatus for generating structured illumination, the microscope apparatus comprising:
a light source portion configured to modulate an optical signal to generate a modulated optical signal and configured to output the generated modulated optical signal;
an illumination portion configured to generate a structured illumination pattern on a sample by performing beam scanning based on the output modulated optical signal;
a detector configured to collect an optical signal from the sample and configured to obtain an image of the sample based on the collected optical signal; and
a controller configured to control the beam scanning so that the illumination portion generates the structured illumination pattern on the sample and configured to perform at least one of synchronization between the light source portion and the detector and synchronization between the illumination portion and the detector.

2. The microscope apparatus of claim 1, wherein the illumination portion is configured to generate a line beam for the beam scanning using the output modulated optical signal and is configured to generate a line structured illumination pattern on a focal plane of the sample by illuminating the generated line beam on the sample through a plurality of lenses.

3. The microscope apparatus of claim 1, wherein the illumination portion comprises:
a first lens configured to focus the output modulated optical signal on a line beam;
a scanner configured to adjust a position of an optical axis of the line beam to perform the beam scanning;
a scan lens configured to focus the line beam;
a tube lens on which the focused line beam is incident; and
an objective lens configured to condense the line beam passing through the tube lens and configured to illuminate the line beam on the sample.

4. The microscope apparatus of claim 1, wherein the controller is configured to synchronize a scanner that performs the beam scanning with an image sensor so that a beginning and an end of a frame of the image sensor of the detector are aligned with a beginning and an end of the structured illumination pattern, respectively.

5. The microscope apparatus of claim 1, wherein the detector comprises an image sensor based on a rolling shutter,
wherein the controller is configured to synchronize a scanner that performs the beam scanning with the image sensor so that a beginning and a velocity of a rolling line of the image sensor are aligned with a beginning and a velocity of the structured illumination pattern, respectively.

6. The microscope apparatus of claim 5, wherein a width of the rolling line corresponds to a multiple of a value obtained by multiplying a spatial period of the structured illumination pattern by a first magnification, wherein the first magnification represents a magnification determined based on a magnification of each of an objective lens and a tube lens in the microscope apparatus.

7. The microscope apparatus of claim 5, wherein a spatial period of the structured illumination pattern is set to a value that is close to a size of a light spot that is consecutively repeated in the structured illumination pattern,
wherein a width of the rolling line corresponds to a value obtained by multiplying the set spatial period by a first magnification,
wherein a duty cycle of the modulated optical signal is less than a time corresponding to a width of one pixel of the image sensor, and
wherein the first magnification represents a magnification determined based on a magnification of each of an objective lens and a tube lens in the microscope apparatus.

8. The microscope apparatus of claim 1, wherein the detector comprises a line sensor,
wherein the controller is configured to synchronize the light source portion with the line sensor so that an image corresponding to one period of the structured illumination pattern is obtained within one frame of the line sensor.

9. The microscope apparatus of claim 8, wherein a sensor width of the line sensor is greater than a width of one structured illumination in the structured illumination pattern.

10. The microscope apparatus of claim 1, wherein the controller is configured to control the light source portion so that a time delay occurs in the modulated optical signal, the illumination portion is configured to generate a structured illumination pattern on a sample by performing the beam scanning based on the modulated optical signal in which the time delay occurs, and the detector is configured to collect a first signal from the sample and is configured to obtain an image having a first phase of the sample based on the collected first signal,
wherein the controller is configured to control the light source portion so that a time delay occurs again in the modulated optical signal in which the time delay occurs, the illumination portion is configured to generate a structured illumination pattern on a sample by performing the beam scanning based on the modulated optical signal in which the time delay occurs again, and the detector is configured to collect a second signal from the sample and is configured to obtain an image having a second phase of the sample based on the collected second signal, and
wherein the controller is configured to obtain a high-quality image of the sample using the obtained images.

11. The microscope apparatus of claim 1, wherein the controller is configured to control the illumination portion so that the illumination portion generates, on the sample, a structured illumination pattern that is different for each frame of the detector, is configured to receive an image for the each frame from the detector, and is configured to generate a high-quality image using the image for the each frame.

12. An operating method of a microscope apparatus that generates structured illumination, the operating method comprising:
modulating an optical signal to generate a modulated optical signal and outputting the generated modulated optical signal;
generating a structured illumination pattern on a sample by performing beam scanning based on the output modulated optical signal;
collecting an optical signal from the sample; and
obtaining an image of the sample based on the collected optical signal.

13. The operating method of claim 12, wherein the generating comprises generating a line beam for the beam scanning using the output modulated optical signal and generating a line structured illumination pattern on a focal plane of the sample by illuminating the generated line beam on the sample through a plurality of lenses.

14. The operating method of claim 12, further comprising:
synchronizing a scanner that performs the beam scanning with an image sensor so that a beginning and an end of a frame of the image sensor that obtains the image are aligned with a beginning and an end of the structured illumination pattern, respectively.

15. The operating method of claim 12, wherein the microscope apparatus comprises an image sensor based on a rolling shutter,
wherein the operating method further comprises synchronizing a scanner that performs the beam scanning with the image sensor so that a beginning and a velocity of a rolling line of the image sensor are aligned with a beginning and a velocity of the structured illumination pattern, respectively.

16. The operating method of claim 15, wherein a width of the rolling line corresponds to a multiple of a value obtained by multiplying a spatial period of the structured illumination pattern by a first magnification, wherein the first magnification represents a magnification determined based on a magnification of each of an objective lens and a tube lens in the microscope apparatus.

17. The operating method of claim 15, wherein a spatial period of the structured illumination pattern is set to a value that is close to a size of a light spot that is consecutively repeated in the structured illumination pattern,
wherein a width of the rolling line corresponds to a value obtained by multiplying the set spatial period by a first magnification,
wherein a duty cycle of the modulated optical signal is less than a time corresponding to a width of one pixel of the image sensor, and
wherein the first magnification represents a magnification determined based on a magnification of each of an objective lens and a tube lens in the microscope apparatus.

18. The operating method of claim 12, wherein the microscope apparatus comprises a line sensor,
wherein the operating method further comprises synchronizing a light source portion that outputs the modulated optical signal with the line sensor so that an image corresponding to one period of the structured illumination pattern is obtained within one frame of the line sensor.

19. The operating method of claim 18, wherein a sensor width of the line sensor is greater than a width of one structured illumination in the structured illumination pattern.

20. The operating method of claim 12, further comprising:
causing a time delay to occur in the modulated optical signal, generating a structured illumination pattern on a sample by performing the beam scanning based on the modulated optical signal in which the time delay occurs, collecting a first signal from the sample, and obtaining an image having a first phase of the sample based on the collected first signal;
causing a time delay to occur again in the modulated optical signal in which the time delay occurs, generating a structured illumination pattern on a sample by performing the beam scanning based on the modulated optical signal in which the time delay occurs again, collecting a second signal from the sample, and obtaining an image having a second phase of the sample based on the collected second signal; and
obtaining a high-quality image of the sample using the obtained images.

21. The operating method of claim 12, further comprising:
by generating, on the sample, a structured illumination pattern that is different for each frame of an image sensor, obtaining an image for the each frame; and
generating a high-quality image using the image for the each frame.
